# EUROPEAN PATENT SPECIFICATION

(11) **EP 3 843 886 B1**
(45) Date of publication and mention of the grant of the patent: **09.08.2023**
(21) Application number: 19749833.0
(22) Date of filing: 02.07.2019
(51) Int. Cl.: B01F 23/213, B01F 25/314, F01N 3/021, F01N 3/20, F01N 3/28, F01N 13/14

(54) **AN ARRANGEMENT FOR INTRODUCING A LIQUID MEDIUM INTO EXHAUST GASES**
ANORDNUNG ZUM EINBRINGEN EINES FLÜSSIGEN MEDIUMS IN ABGASE
AGENCEMENT DESTINÉ À INTRODUIRE UN MILIEU LIQUIDE DANS DES GAZ D'ÉCHAPPEMENT

(30) Priority: 30.08.2018 NL 2021516
(43) Date of publication of application: 07.07.2021
(73) Proprietor: DAF Trucks N.V., 5643 TW Eindhoven (NL)
(72) Inventor: JANSSEN, Franciscus Thomas Everardus, 5643 TW Eindhoven (NL); GOETELEN, Nils, 5643 TW Eindhoven (NL)
(74) Representative: V.O.
(86) International application number: PCT/NL2019/050407
(87) International publication number: WO 2020/046111

(56) References cited:
- US-A1- 2018 023 446

## Description

The invention relates to arrangement for introducing a liquid medium, e.g. urea, into exhaust gases from a diesel combustion engine, which arrangement comprises:
- a mixing chamber housing enclosing a mixing chamber, said mixing chamber housing comprising an exhaust gases inlet for introducing exhaust gases into the mixing chamber and a mixture outlet for supplying a mixture of liquid medium and exhaust gases out of the mixing chamber;
- a liquid medium injection port for injecting liquid medium into the mixing chamber; and
- a liquid medium housing positioned within the mixing chamber housing and enclosed by the mixing chamber housing, the liquid medium housing enclosing the mixing chamber, the liquid medium housing comprising an open second liquid medium housing side directed to the liquid medium injection port, said open second liquid medium housing side forming the entry for exhaust gases and liquid medium into the mixing chamber, the liquid medium injection port and the liquid medium housing being arranged such that liquid medium is only injected into the liquid medium housing, wherein outer walls of the liquid medium housing are spaced from inner walls of the mixing chamber housing, and wherein the exhaust gases inlet and the liquid medium housing are arranged such that, during operation, a flow of exhaust gases free of liquid medium is created around the liquid medium housing.

Such an arrangement is for example known from EP1712756A1. This known arrangement, also called a mixing module for a fluid in a current of gas includes an external duct designed to permit passage of a current of exhaust gases of an engine equipped with SCR (Selective Catalytic Reduction) system. An internal duct is thermally isolated from the external duct and is provided coaxial to the external duct so that there is a clearance for passage of the gas between the two ducts. The known mixing module comprises means for injecting a solution of urea in an injection point of the internal duct and such that the solution of urea flows through the internal duct and not through the clearance. A portion of the exhaust gas flows through clearance and contributes to a major extent to maintain the internal duct sufficiently hot to avoid or reduce deposits. Although in the known arrangement wall surfaces of the internal duct are sufficiently hot to avoid or reduce deposits, also called wetting of the wall surfaces, there is a constant desire in the field to further improve NOx reduction.

US 2018/0023446 A1 discloses an arrangement for introducing a liquid medium into exhaust gases according to the preamble of claim 1.

It is therefore the object of the invention to provide an arrangement for introducing a liquid medium, e.g. urea, into exhaust gases from a diesel combustion engine for supply to a selective catalytic reduction device with an improved NOx reduction. According to the invention this object is obtained by an arrangement for introducing a liquid medium, e.g. urea, into exhaust gases from a diesel combustion engine and for supplying a mixture of liquid medium and exhaust gases to a selective catalytic reduction device, which arrangement comprises the features of claim 1. By in accordance with the invention arranging the exhaust gases inlet and the liquid medium housing such that, during operation, the flow of exhaust gases free of liquid medium created around the liquid medium housing is directed to the open second liquid medium housing side directed to the liquid medium injection port, i.e. said flow of exhaust gases free of liquid medium is directed to the entry for exhaust gases and liquid medium into the mixing chamber, it is enabled that all of the exhaust gas directly comes into contact with injected liquid medium, thereby ensuring that NOx reduction can effectively take place in all of the exhaust gas. The invention is based on the insight that in the arrangement known from EP1712756A1 in the portion of the exhaust gas flowing through clearance and heating up the internal duct no reducing liquid medium is injected. This portion of exhaust gas passes the internal duct and only is mixed with the mixture of exhaust gas and liquid medium which have flown through the internal duct downstream of the internal duct. In this manner the mixture of the portion of the exhaust gas flowing through clearance with reducing agent is less effective and thus the NOx reduction is less effective. Since in accordance with the invention all of the exhaust gas is directed to the open second liquid medium housing side directed to the liquid medium injection port, i.e. to the entry of the mixing chamber, reduction of NOx is improved while the temperature of the liquid medium housing remains at a sufficiently high level to prevent wetting and crystallization grow.

In an embodiment of an arrangement according to the invention the mixing chamber housing is substantially rectangular and comprises a top wall, wherein the liquid medium injection port is provided adjacent the top wall of the mixing chamber housing, and wherein the liquid medium injection port has an injection port axis parallel to the top wall of the mixing chamber housing. In this manner not only a compact arrangement for introducing a liquid medium into exhaust gases from a diesel combustion engine for supply to a selective catalytic reduction device can be obtained but as a result of the injection port axis, which defines the injection direction of liquid medium, also the volume within which the exhaust gases come into contact with the liquid medium is enlarged, thereby increasing the NOx reduction.

In an embodiment of an arrangement according to the invention the liquid medium housing then comprises a top wall extending to above the liquid medium injection port. In this manner it is prevented that liquid medium comes into contact with even the smallest wall surface of the mixing chamber housing between the liquid injection port and the liquid medium housing, thereby further preventing the start of crystallization of the liquid medium.

In a further embodiment of an arrangement according to the invention the liquid medium housing comprises a bottom wall extending from a first liquid medium housing side wall partly over the width of the mixing chamber housing. In this manner a major part of the exhaust gases entering the mixing chamber through the exhaust gases inlet can efficiently flow upwards in a direction towards the liquid medium injection port. In particular when the distance between inner walls of the mixing chamber housing and liquid medium housing top wall and first side wall has a value between 3 and 8 mm or a value between 4 and 6 mm or a value of 5 mm, thereby forming a small clearance between the inner walls of the mixing chamber housing and the liquid medium housing top wall and first side wall, the portion of exhaust gases flowing between the inner walls of the mixing chamber housing and the liquid medium housing top wall and first side wall are accelerated thereby creating an under pressure at the top of the mixing chamber housing, in particular at the location of the liquid medium injection port which under pressure effectively draws all the exhaust gases towards the open second liquid medium housing side where all the exhaust gases enter the mixing chamber. In addition, heating of the walls of the liquid medium housing appears to be sufficiently effective in practically all operating conditions of the diesel engine to prevent wetting and crystallization growth.

The mixing chamber housing is formed by a top wall, an end cap and a baffle plate, wherein the exhaust gases inlet and the mixture outlet are provided in the baffle plate, i.e. the exhaust gases inlet and the mixture outlet are positioned at the same side of the mixing chamber housing. In this manner the arrangement is constructed in a very compact manner.

According to the invention the arrangement further comprises a tubular diesel particle filter housing extending through a lower opening of the baffle plate, said lower opening forming the exhaust gases inlet, said tubular diesel particle filter housing having a diesel particle filter housing axis extending transverse to the baffle plate, wherein the injection port axis of the liquid medium injection port is transverse to the diesel particle filter housing axis, and wherein the distance between liquid medium housing first and second end walls and the baffle plate and end cap, respectively, has a value between 3 and 8 mm or a value between 4 and 6 mm or a value of 5 mm. In this manner the portion of exhaust gases flowing between the baffle plate and end cap and first and second end walls of the liquid medium are contributing to creating an under pressure at the top of the mixing chamber housing, in particular at the location of the liquid medium injection port.

In a further embodiment of an arrangement according to the invention the second end wall of the liquid medium housing then comprises one or more depressions at which depressions the distance between the second end wall of the liquid medium housing and the end cap is increased. In this manner a sufficient amount of exhaust gases can flow via the depressions between the baffle plate and the liquid medium housing to heat up the walls of the liquid medium housing to prevent wetting and crystallization of the liquid medium. For the same reason it is preferred that the baffle plate then comprises one or more depressions at which depressions the distance between the baffle plate and the liquid medium housing is increased.

In still a further embodiment of an arrangement according to the invention the arrangement further comprises a guide plate positioned above the diesel particle filter housing and surrounded by the liquid medium housing, the guide plate being attached to the liquid medium housing, and wherein the injection port axis of the liquid medium injection port is parallel to a top wall of the guide plate. In this manner a relative simple construction of the arrangement can be obtained which provides an efficient mixing of exhaust gases with liquid medium. In particular when the first end wall of the liquid medium housing comprises an outlet opening adjacent to and in communication with an upper opening of the baffle plate, and when the first end wall of the liquid medium housing is attached to the baffle plate or when the liquid medium housing comprises flanges adjacent to the outlet opening of the liquid medium housing by which flanges the liquid medium housing is attached to the baffle plate, the construction of the arrangement can be relatively simple. In this manner it is possible to construct the baffle plate, the liquid medium housing and the guide plate as a pre-assembly.

The invention will be further explained with reference to the Figures, in which non-limiting exemplary embodiments of an arrangement for introducing a liquid medium, e.g. urea, into exhaust gases from a diesel combustion engine for supply to a selective catalytic reduction device according to the invention are shown:
Fig. 1 shows an embodiment of an arrangement for introducing a liquid medium into exhaust gases from a diesel combustion engine for supply to a selective catalytic reduction device in assembled state in perspective as seen from a first end of a diesel particle filter housing;
Fig. 2 shows the arrangement of Fig. 1 in perspective as seen from a second end of the diesel particle filter housing with a baffle plate and a liquid medium housing left out;
Fig. 3 shows the arrangement of Fig. 1 in perspective as seen from the second end of the diesel particle filter housing with the baffle plate left out;
Fig. 4 shows the arrangement of Fig. 1 in end view as seen from the second end of the diesel particle filter housing with the baffle plate left out;
Fig. 5 shows an enlarged portion of Fig. 4 indicating the distance between the liquid medium housing and an end cap;
Fig. 6 shows the assembly of baffle plate, liquid medium housing and guide plate of the arrangement shown in Fig. 1 in perspective as seen from an open second liquid medium housing side;
Fig. 7 shows the assembly of baffle plate, liquid medium housing and guide plate of the arrangement shown in Fig. 6 in perspective as seen from the side of the baffle plate;
Fig. 8 shows the arrangement of Fig. 1 with the baffle plate and the diesel particle filter housing left out; and
Figs. 9 and 10 show exploded views of the liquid medium housing and the guide plate of the arrangement as shown in Fig. 1.

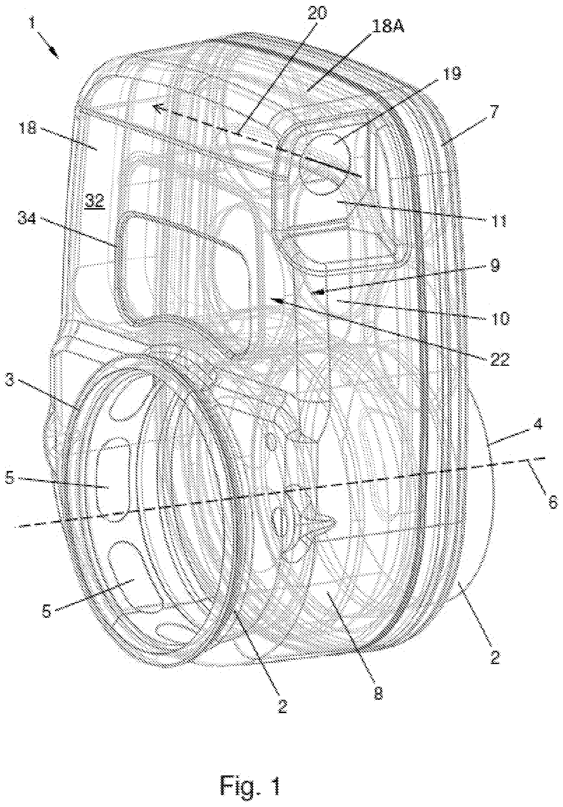

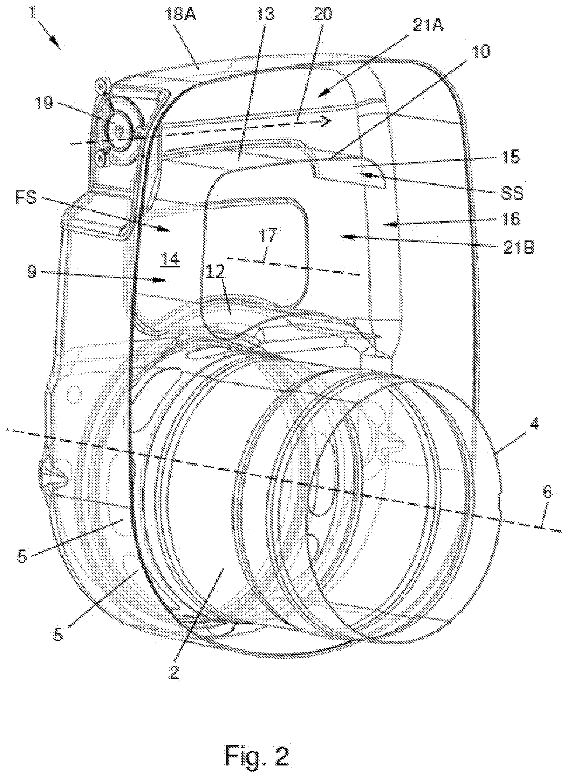

In Fig. 1 an embodiment of an arrangement 1 for introducing a liquid medium into exhaust gases from a diesel combustion engine for supply to a selective catalytic reduction device in assembled state is shown in perspective as seen from a first end 3 of a tubular diesel particle filter housing 2 which extends through a lower opening 8 of a baffle plate 7. The arrangement 1 comprises a mixing chamber housing formed by a top wall 18A, an end cap 18 and the baffle plate 7 which enclose a mixing chamber 21A, 21B (Fig. 2). The top wall 18A can be a separate wall part but can also be formed by flanges of the end cap 18 and/or baffle plate 7. The mixing chamber housing comprises an exhaust gases inlet formed by a second open end 4 of the diesel particle filter housing 2 for introducing exhaust gases into the mixing chamber 21A, 21B. The mixing chamber housing further comprises a mixture outlet formed by an upper opening 11 of the baffle plate 7 for supplying a mixture of liquid medium and exhaust gases out of the mixing chamber toward a selective catalytic reduction device. Thus the exhaust gases inlet 4 and the mixture outlet 10 are positioned at the same side of the mixing chamber housing 7, 18, i.e. in the side of the baffle plate 7.

A liquid medium injection port 19 for injecting liquid medium into the mixing chamber 21A, 21B is provided adjacent the top wall 18A of the mixing chamber housing, and has an injection port axis 20 parallel to the top wall 18A of the mixing chamber housing.

The arrangement 1 further comprises a liquid medium housing 22 positioned within the mixing chamber housing 7, 18 and enclosed by the mixing chamber housing 7, 18. The liquid medium housing 22 encloses the mixing chamber 21A, 21B and has an open second liquid medium housing side 23 directed to the liquid medium injection port 19, said open second liquid medium housing side 23 forming the entry for exhaust gases and liquid medium into the mixing chamber. The liquid medium injection port 19 and the liquid medium housing 22 are arranged such that liquid medium is only injected into the liquid medium housing 22 such that mixing of liquid medium and exhaust gases only take place inside the liquid medium housing 22. Outer walls of the liquid medium housing 22 are spaced from inner walls of the mixing chamber housing 7, 18 such that heat transfer by contact conduction is at least substantially reduced. As will be discussed in more detail below the exhaust gases inlet 4 and the liquid medium housing 22 are arranged such that, during operation, a flow of exhaust gases free of liquid medium is created around the liquid medium housing 22 in the direction towards the open second liquid medium housing side 23 which is directed to the liquid medium injection port 19, so that the walls of the liquid medium housing are heated up.

As can be seen in Fig. 1 the mixing chamber housing 7, 18 is substantially rectangular or box shaped, with - in the shown embodiment - a lower side that is curved to conform to the tubular diesel particle filter housing 2.

During operation the first end 3 of the tubular diesel particle filter housing 2 is closed by a removable cover (not shown). The cover can be removed for servicing a diesel particle filter inside the diesel particle filter housing 2. The second end 4 of the diesel particle filter housing 2 opposite the first end 3 forms the exhaust gases inlet for exhaust gases coming from the diesel particle filter. A plurality of openings 5 is provided in the tubular diesel particle filter housing 2 near the first end 3. In the shown embodiment the openings 5 are oval, but in other embodiments these openings can have any other suitable shape. The diesel particle filter housing 2 has a diesel particle filter housing axis 6 extending from the second end 4 to the first end 3. The baffle plate 7 of the arrangement 1 (see Fig. 1. In Fig. 2 the baffle plate and the liquid medium housing are left out to better show the interior) extends transverse to the diesel particle filter housing axis 6.

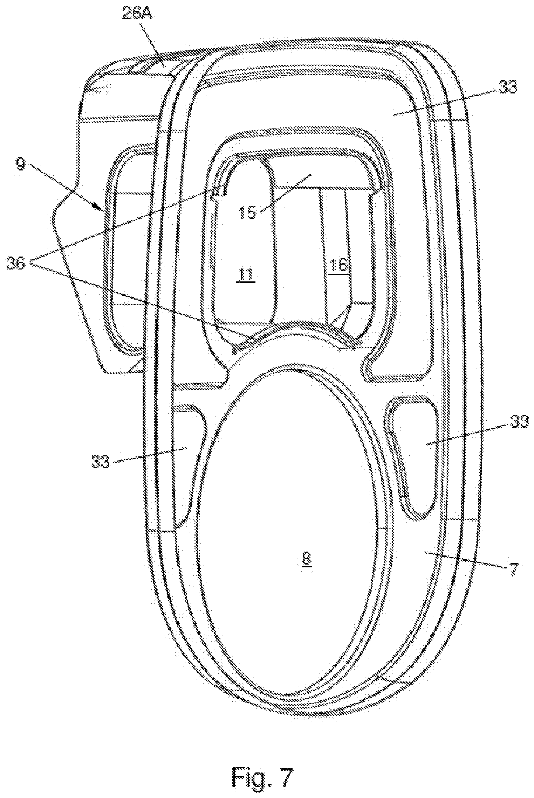

The arrangement 1 further comprises a guide plate 9 positioned above the diesel particle filter housing 2. The guide plate 9 is arranged and shaped to guide exhaust gases and liquid medium via a first mixing chamber portion 21A to a second mixing chamber portion 21B which latter communicates with the mixture outlet 10. In the shown embodiment the guide plate 9 therefore generally has a rectangular box-like shape and has a first open end 10 (in this embodiment coinciding with the upper opening 10 forming the mixture outlet) directed to the baffle plate 7. The upper opening 11 (see also Fig. 7) of the baffle plate 7 above the lower opening 8 coincides with the first open end 10 of the guide plate 9. As is shown in Fig. 2 the guide plate 9 has a top wall 13 and a bottom wall 12 adjacent to and at a distance above the diesel particle filter housing 2. A first side FS of the guide plate 9 comprises a first side wall 14 connecting the bottom wall 12 and the top wall 13. A second side SS of the guide plate 9 opposite the first side FS has a second side wall portion 15 protruding over a second distance downward from the top wall 13 towards the bottom wall 12, wherein the second distance is such that a relatively large side opening 16 is formed in the second side SS of the rectangular box-like shape of the guide plate 9. At the side of the second side SS the bottom wall 12 extends further than the top wall 13 at the second side of the guide plate 9, preferably up to the inner wall of the liquid medium housing 22. The guide plate 9 has a guide plate axis 17 parallel to the diesel particle filter housing axis 6.

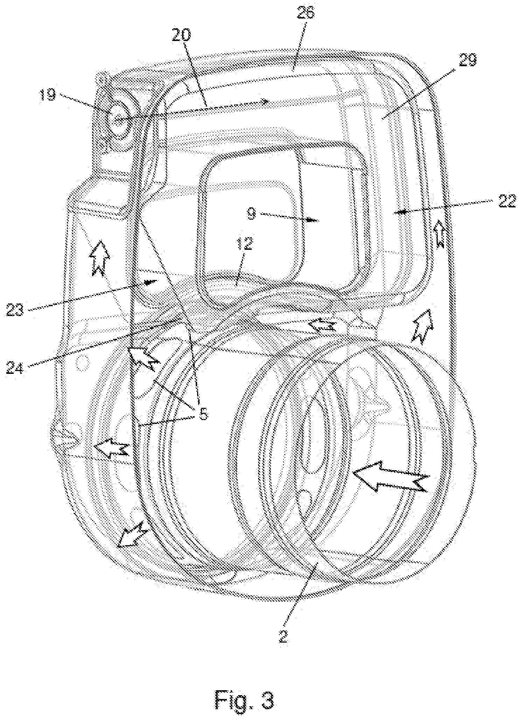

The end cap 18 is connected to the baffle plate 7 and the end cap 18 and the baffle plate 7 enclose the part of the diesel filter particle housing 2 comprising the openings 5 and the liquid medium housing 22 (Fig. 3) and thus also the guide plate 9, since the guide plate 9 is positioned within the liquid medium housing 22. The end cap 18 has an opening through which the first end 3 of the diesel particle filter housing 2 extends. The liquid medium injection port 19 is provided in the top of the end cap 18 adjacent the top wall 18A of the mixing chamber housing at the side thereof where the first side FS of the guide plate 9 is positioned, i.e. at the side of the end cap 18 which is opposite the side of the end cap 18 where the side opening 16 of the guide plate 9 is positioned. The liquid medium injection port 19 has an injection port axis 20 transverse to the diesel particle filter housing axis 6 and parallel to the top wall 13 of the guide plate 9. As a result of this direction of the injection port axis 20, which defines the injection direction of liquid medium, the volume within which the exhaust gases come into contact with the liquid medium is sufficiently large to provide for an efficient NOx reduction.

The mixing chamber of the arrangement 1 is formed by the first and the second mixing chamber portions 21A, 21B (Fig. 2) for mixing liquid medium with exhaust gases. The first mixing chamber portion 21A is positioned above the top wall 13 of the guide plate 9 and the second mixing chamber portion 21B is (partially) enclosed by the bottom wall 12, the top wall 13 and first side FS of the guide plate 9 and is accessible via the open side opening 16. In the direction of the diesel particle filter housing axis 6 the mixing chamber is of course bounded by the end cap 18 and the baffle plate 7.

During operation of the arrangement 1 exhaust gases enter the arrangement 1 via the second end 4 (i.e. the exhaust gases inlet, see arrows in Figs. 3, 4 and 5) of the diesel particle filter housing 2 and flow through the circumferential openings 5 into an inner area formed by the end cap 18 on one side and the baffle plate 7 on the other. A major part of the exhaust gases flowing through the openings 5 streams towards the open second liquid medium housing side 23 and from there enters into the first mixing chamber portion 21A. Liquid medium, e.g. a reducing agent such as urea, is injected into the exhaust gases via the liquid medium injection port 19 and is vaporized and mixed with the exhaust gases in the first mixing chamber portion 21A and thereafter the mixture enters the second mixing chamber portion 21B via the side opening 16, in which second mixing chamber portion 21B the mixture is further mixed. Thereafter, the mixture of liquid medium and exhaust gases is discharged via the upper opening 11 to the selective catalytic reduction device. Thus during operation, the exhaust gases enter the diesel particle filter housing 2 via the lower opening 8 in a first direction parallel to the diesel particle filter housing axis 6, while discharge or supply of the mixture of liquid medium and exhaust gases to the selective catalytic reduction from the arrangement 1 takes place via the upper opening 11 of the baffle plate 7 in a second direction opposite to the first direction.

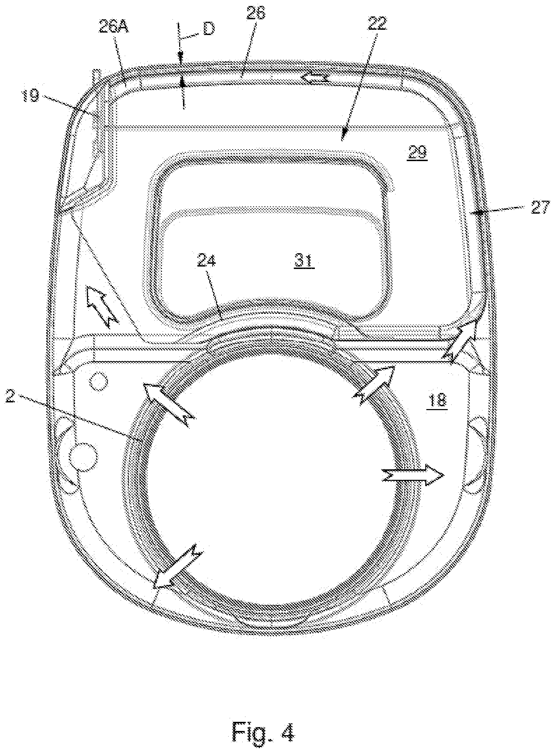

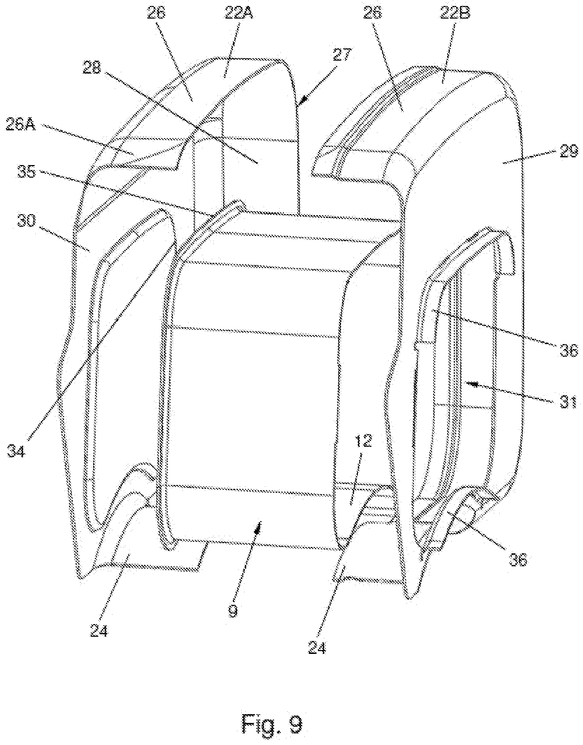

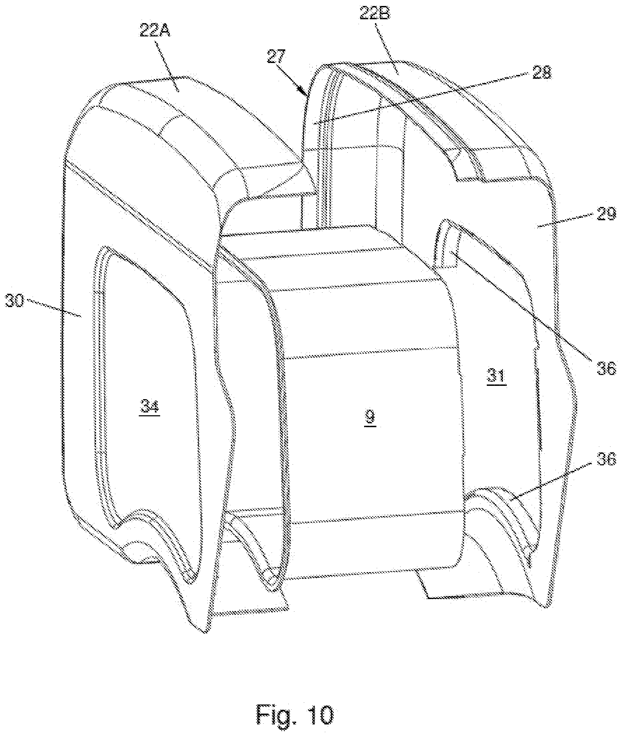

In Figures 4 to 10 is shown that the liquid medium housing 22 is provided with a liquid medium housing bottom wall 24 positioned between the bottom wall 12 of the guide plate 9 and the diesel particle filter housing 2. The liquid medium housing 22 has a top wall 26 connected to the liquid medium housing bottom wall 24 by a first liquid medium housing side 27 having a first liquid medium side wall 28 (Figs. 9, 10) positioned between the second side SS of the guide plate 9 and the end cap 18. The open second liquid medium housing side 23 of the liquid medium housing 22 forming the entry into the mixing chamber is positioned opposite to the first liquid medium housing side 27. The liquid medium housing 22 further has a first end wall 29 and an opposite closed second end wall 30. The first end wall 29 of the liquid medium housing 22 comprises an outlet opening 31 adjacent to and in communication with the upper opening of the baffle plate 7.

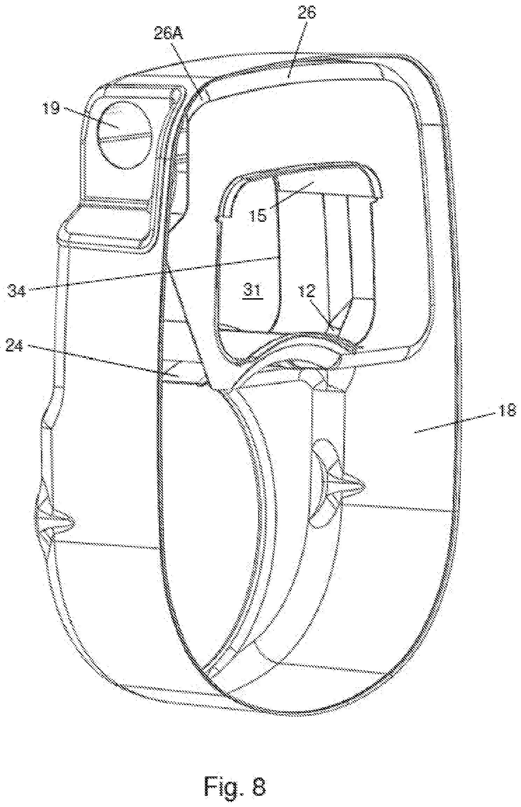

The liquid medium housing top wall 26 extends to above the liquid medium injection port 19 provided in the top of the end cap 18 as is shown in Figs. 4 and 8. The end part 26A of the liquid medium housing top wall 26 thus screens the liquid medium injection port 19 off from the top wall of the end cap 18.

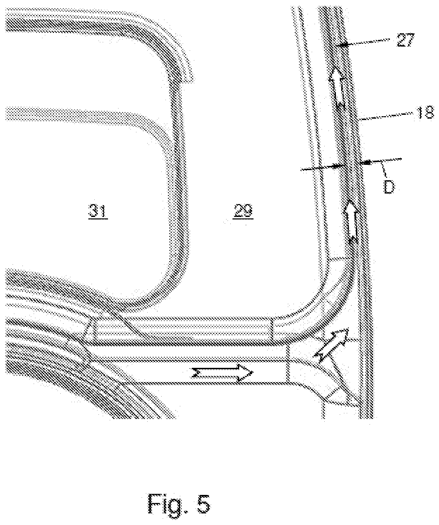

As discussed above most part of the exhaust gases introduced within the mixing chamber formed by the end cap 18 and the baffle plate 7 enter the open second liquid medium housing side 23 and consequently enter the mixing chamber portion 21A. In the embodiment shown this is realized in that the liquid medium housing bottom wall 24 extends from the first liquid medium housing side wall 27 partly over the width of the end cap 18. In this manner exhaust gases flowing through the plurality of openings 5 of the diesel particle filter housing 2 can flow in a sufficient amount upwards in a direction towards the liquid medium injection port 19 via the open second liquid medium housing side 23. At the first liquid medium housing side 27 and at liquid medium housing top wall 26 there is a clearance having a distance D between inner walls of the end cap 18 and the liquid medium housing top and side walls 26, 27 with a value between 3 and 8 mm or a value between 4 and 6 mm or a value of 5 mm, as is indicated in Figs. 4 and 5. The same distance or space is present between the liquid medium housing first and second end walls 29, 30 and the baffle plate 7 and the end cap 18, respectively. Due to the relatively small distance between the respective walls the velocity of the portion of the exhaust gases flowing between the inner walls of the mixing chamber housing and the respective liquid medium housing walls are accelerated thereby creating an under pressure at the top of the mixing chamber housing, in particular at the location of the liquid medium injection port 19 which under pressure effectively draws all the exhaust gases towards the open second liquid medium housing side 23 which is directed to the liquid medium injection port 19, while heating of the walls of the liquid medium housing 22 appears to be sufficiently effective in practically all operating conditions of the diesel engine to prevent wetting and crystallization growth. In this manner the portion of the exhaust gases heating up the walls of the liquid medium housing 22 also flows into the first mixing chamber portion 21A via the open second liquid medium housing side 23 and the NOx present in that portion of exhaust gases is also efficiently reduced.

In certain embodiments of a diesel engine the baffle plate 7 and the end surface 32 (Fig. 1) of the end cap 18 can be exposed to the environment to a relatively large extent, and in those situations it is advantageous to provide the baffle plate with one or more depressions 33, at which depressions 33 the distance between the baffle plate 7 and the liquid medium housing 22 is increased, and to provide the second end wall 30 of the liquid medium housing 22 with one or more depressions 34 at which depressions 34 the distance between the second end wall 30 of the liquid medium housing 22 and the end cap 18 is increased. As a result of the depressions 33, 34 a sufficient amount of exhaust gases can flow via the depressions 33, 34 between the baffle plate 7 / end cap 18 and the liquid medium housing 22 to heat up the walls of the liquid medium housing 22 to prevent wetting and crystallization of the liquid medium.

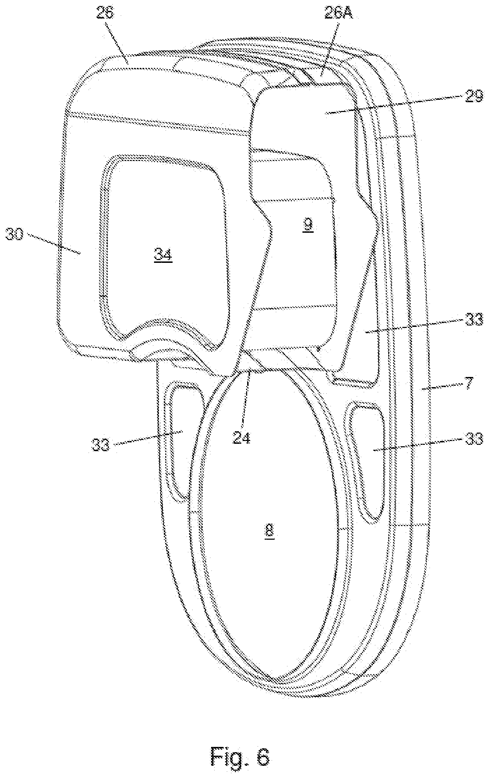

In the shown embodiment of the arrangement 1 according to the invention the guide plate 9 is attached to the liquid medium housing 22, for example by welding. The liquid medium housing 22 can be constructed from two parts 22A, 22B (Figs. 9, 10). The guide plate 9 can be welded to one of those parts, e.g. part 22A, e.g. at the location of a guide plate flange 35. Thereafter the other part, in this case part 22B, is welded to the first part 22A thereby completing the assembly of guide plate and liquid medium housing. As e.g. indicated in Figs. 6, 7 the first end wall 29 of the liquid medium housing 22 is attached, e.g. by welding, to the baffle plate 7 thereby forming a pre-assembly of the baffle plate, the liquid medium housing and the guide plate. Attachment of the liquid medium housing 22 to the baffle plate 7 can alternatively or additionally by obtained at the location of flanges 36 of the first end wall 29 which flanges 36 are adjacent to the outlet opening 31 of the liquid medium housing 22.

## Claims

1. An arrangement (1) for introducing a liquid medium, e.g. urea, into exhaust gases from a diesel combustion engine, which arrangement (1) comprises:
- a mixing chamber housing (7, 18) enclosing a mixing chamber (21A, 21B), said mixing chamber housing (7, 18) comprising an exhaust gases inlet (4) for introducing exhaust gases into the mixing chamber (21A, 21B) and a mixture outlet (10) for supplying a mixture of liquid medium and exhaust gases out of the mixing chamber (21A, 21B); the mixing chamber housing (7, 18) being formed by a top wall (18A), an end cap (18) and a baffle plate (7), wherein the exhaust gases inlet (4) and the mixture outlet (10) are provided in the baffle plate (7), i.e. the exhaust gases inlet (4) and the mixture outlet (10) are positioned at the same side of the mixing chamber housing (7, 18);
- a liquid medium injection port (19) for injecting liquid medium into the mixing chamber (21A, 21B);
- a liquid medium housing (22) positioned within the mixing chamber housing (7, 18) and enclosed by the mixing chamber housing (7, 18), the liquid medium housing (22) enclosing the mixing chamber (21A, 21B), the liquid medium housing (22) comprising an open second liquid medium housing side (23) directed to the liquid medium injection port (19), said open second liquid medium housing side (23) forming the entry for exhaust gases and liquid medium into the mixing chamber (21A, 21B), the liquid medium injection port (19) and the liquid medium housing (22) being arranged such that liquid medium is only injected into the liquid medium housing (22), wherein outer walls of the liquid medium housing (22) are spaced from inner walls of the mixing chamber housing (7, 18), and wherein the exhaust gases inlet (4) and the liquid medium housing (22) are arranged such that, during operation, a flow of exhaust gases free of liquid medium is created around the liquid medium housing (22), wherein the exhaust gases inlet (4) and the liquid medium housing (22) are arranged such that, during operation, the flow of exhaust gases free of liquid medium created around the liquid medium housing (22) is directed to the open second liquid medium housing side (23) directed to the liquid medium injection port (19),
**characterized in that** the arrangement (1) further comprises a tubular diesel particle filter housing (2) extending through a lower opening (8) of the baffle plate (7), said lower opening (8) forming the exhaust gases inlet (4), said tubular diesel particle filter housing (2) having a diesel particle filter housing axis (6) extending transverse to the baffle plate (7), the injection port axis (20) of the liquid medium injection port (19) being transverse to the diesel particle filter housing axis (6) and **in that** the distance between liquid medium housing first and second end walls (29, 30) and the baffle plate (7) and end cap (18), respectively, has a value between 3 and 8 mm or a value between 4 and 6 mm or a value of 5 mm.

2. The arrangement (1) according to claim 1, **characterized in that** the second end wall of the liquid medium housing (22) comprises one or more depressions (34) at which depressions (34) the distance between the second end wall of the liquid medium housing (22) and the end cap (18) is increased.

3. The arrangement (1) according to claim 1 or 2, **characterized in that** the arrangement (1) further comprises a guide plate (9) positioned above the diesel particle filter housing and surrounded by the liquid medium housing (22), the guide plate (9) being attached to the liquid medium housing (22), and **in that** the injection port axis (20) of the liquid medium injection port (19) is parallel to a top wall (13) of the guide plate (9).

4. The arrangement (1) according to claim 3, **characterized in that** the first end wall (29) of the liquid medium housing (22) comprises an outlet opening (31) adjacent to and in communication with an upper opening of the baffle plate (7), **in that** the first end wall of the liquid medium housing (22) is attached to the baffle plate or **in that** the liquid medium housing (22) comprises flanges adjacent to the outlet opening of the liquid medium housing (22) by which flanges the liquid medium housing (22) is attached to the baffle plate.

5. The arrangement (1) according to claim 3 or 4, **characterized in that** the baffle plate comprises one or more depressions (33) at which depressions (33) the distance between the baffle plate (7) and the liquid medium housing (22) is increased.

6. The arrangement (1) according to any one of the preceding claims, **characterized in that** the mixing chamber housing (7, 18) is substantially rectangular, **in that** the liquid medium injection port (19) is provided adjacent the top wall (18A) of the mixing chamber housing (7, 18), and **in that** the liquid medium injection port (19) has an injection port axis (20) parallel to the top wall (18A) of the mixing chamber housing (7, 18).

7. The arrangement (1) according to claim 6, **characterized in that** the liquid medium housing (22) comprises a top wall (26) extending to above the liquid medium injection port (19).

8. The arrangement (1) according to any one of the preceding claims, **characterized in that** the liquid medium housing (22) comprises a bottom wall (24) extending from a first liquid medium housing side wall (27) partly over the width of the mixing chamber housing (7, 18).

9. The arrangement (1) according to claims 7 or 8, **characterized in that** the distance between inner walls of the mixing chamber housing (7, 18) and liquid medium housing top wall (26) and first side wall (27) has a value between 3 and 8 mm or a value between 4 and 6 mm or a value of 5 mm.

## Patentansprüche

1. Anordnung (1) zum Einbringen eines flüssigen Mediums, z. B. Harnstoff, in Abgase einer Dieselbrennkraftmaschine, wobei die Anordnung (1) umfasst:
- ein Mischkammergehäuse (7, 18), das eine Mischkammer (21A, 21B) umschließt, wobei das Mischkammergehäuse (7, 18) einen Abgaseinlass (4) zum Einbringen von Abgasen in die Mischkammer (21A, 21B) und einen Gemischauslass (10) zum Zuführen eines Gemischs aus Flüssigmedium und Abgasen aus der Mischkammer (21A, 21B) umfasst, wobei das Mischkammergehäuse (7, 18) durch eine obere Wand (18A), eine Endkappe (18) und eine Prallplatte (7) gebildet wird, wobei der Abgaseinlass (4) und der Gemischauslass (10) in der Prallplatte (7) ausgebildet sind, d. h. der Abgaseinlass (4) und der Gemischauslass (10) in der Prallplatte (7) bereitgestellt sind, d. h. der Abgaseinlass (4) und der Gemischauslass (10) sind auf der gleichen Seite des Mischkammergehäuses (7, 18) positioniert;
- eine Flüssigmediumeinspritzöffnung (19) zum Einspritzen von Flüssigmedium in die Mischkammer (21A, 21B);
- ein Flüssigmediumgehäuse (22), das innerhalb des Mischkammergehäuses (7, 18) positioniert und von dem Mischkammergehäuse (7, 18) umschlossen ist, wobei das Flüssigmediumgehäuse (22) die Mischkammer (21A, 21B) umschließt, wobei das Flüssigmediumgehäuse (22) eine offene zweite Flüssigmediumgehäuseseite (23) umfasst, die zu der Flüssigmediumeinspritzöffnung (19) gerichtet ist, wobei die offene zweite Flüssigmediumgehäuseseite (23) den Eintritt für Abgase und Flüssigmedium in die Mischkammer (21A, 21B) bildet, die Flüssigmediumeinspritzöffnung (19) und das Flüssigmediumgehäuse (22) so angeordnet sind, dass Flüssigmedium nur in das Flüssigmediumgehäuse (22) eingespritzt wird,
wobei Außenwände des Flüssigmediumgehäuses (22) von Innenwänden des Mischkammergehäuses (7, 18) beabstandet sind, und wobei der Abgaseinlass (4) und das Flüssigmediumgehäuse (22) so angeordnet sind, dass während des Betriebs ein von Flüssigmedium freier Strom von Abgasen um das Flüssigmediumgehäuse (22) herum erzeugt wird, wobei der Abgaseinlass (4) und das Flüssigmediumgehäuse (22) so angeordnet sind, dass während des Betriebs der Strom von Abgasen, die frei von Flüssigmedium sind und um das Flüssigmediumgehäuse (22) herum erzeugt werden, zu der offenen zweiten Flüssigmediumgehäuseseite (23) gerichtet wird, die zu der Flüssigmediumeinspritzöffnung (19) gerichtet ist, **dadurch gekennzeichnet, dass** die Anordnung (1) ferner ein röhrenförmiges Dieselpartikelfiltergehäuse (2) umfasst, das sich durch eine untere Öffnung (8) der Prallplatte (7) erstreckt, wobei die untere Öffnung (8) den Abgaseinlass (4) bildet, wobei das röhrenförmige Dieselpartikelfiltergehäuse (2) eine Dieselpartikelfiltergehäuseachse (6) aufweist, die sich quer zur Prallplatte (7) erstreckt, wobei die Einspritzöffnungsachse (20) der Flüssigmediumeinspritzöffnung (19) quer zur Dieselpartikelfiltergehäuseachse (6) verläuft, und dass der Abstand zwischen der ersten und zweiten Endwand (29, 30) des Flüssigmediumgehäuses und der Prallplatte (7) und der Endkappe (18) einen Wert zwischen 3 und 8 mm oder einen Wert zwischen 4 und 6 mm oder einen Wert von 5 mm aufweist.

2. Anordnung (1) nach Anspruch 1, **dadurch gekennzeichnet, dass** die zweite Endwand des Flüssigmediumgehäuses (22) eine oder mehrere Vertiefungen (34) umfasst, an denen der Abstand zwischen der zweiten Endwand des Flüssigmediumgehäuses (22) und der Endkappe (18) vergrößert ist.

3. Anordnung (1) nach Anspruch 1 oder 2, **dadurch gekennzeichnet, dass** die Anordnung (1) ferner eine Führungsplatte (9) umfasst, die oberhalb des Dieselpartikelfiltergehäuses positioniert und von dem Flüssigmediumgehäuse (22) umgeben ist, wobei die Führungsplatte (9) an dem Flüssigmediumgehäuse (22) befestigt ist, und dass die Einspritzöffnungsachse (20) der Flüssigmediumeinspritzöffnung (19) parallel zu einer oberen Wand (13) der Führungsplatte (9) ist.

4. Anordnung (1) nach Anspruch 3, **dadurch gekennzeichnet, dass** die erste Endwand (29) des Flüssigmediumgehäuses (22) eine Auslassöffnung (31) umfasst, die an eine obere Öffnung der Prallplatte (7) angrenzt und mit dieser in Verbindung steht, dass die erste Endwand des Flüssigmediumgehäuses (22) an der Prallplatte befestigt ist oder dass das Flüssigmediumgehäuse (22) Flansche umfasst, die an die Auslassöffnung des Flüssigmediumgehäuses (22) angrenzen, wobei das Flüssigmediumgehäuse (22) durch diese Flansche an der Prallplatte befestigt ist.

5. Anordnung (1) nach Anspruch 3 oder 4, **dadurch gekennzeichnet, dass** die Prallplatte eine oder mehrere Vertiefungen (33) umfasst, an denen der Abstand zwischen der Prallplatte (7) und dem Flüssigmediumgehäuse (22) vergrößert ist.

6. Anordnung (1) nach einem der vorhergehenden Ansprüche, **dadurch gekennzeichnet, dass** das Mischkammergehäuse (7, 18) im Wesentlichen rechteckig ist, dass die Flüssigmediumeinspritzöffnung (19) angrenzend an die obere Wand (18A) des Mischkammergehäuses (7, 18) vorgesehen ist, und dass die Flüssigmediumeinspritzöffnung (19) eine Einspritzöffnungsachse (20) parallel zur oberen Wand (18A) des Mischkammergehäuses (7, 18) aufweist.

7. Anordnung (1) nach Anspruch 6, **dadurch gekennzeichnet, dass** das Flüssigmediumgehäuse (22) eine obere Wand (26) aufweist, die sich bis über die Flüssigmediumeinspritzöffnung (19) erstreckt.

8. Anordnung (1) nach einem der vorhergehenden Ansprüche, **dadurch gekennzeichnet, dass** das Flüssigmediumgehäuse (22) eine Bodenwand (24) aufweist, die sich von einer ersten Flüssigmediumgehäuseseitenwand (27) teilweise über die Breite des Mischkammergehäuses (7, 18) erstreckt.

9. Anordnung (1) nach Anspruch 7 oder 8, **dadurch gekennzeichnet, dass** der Abstand zwischen den Innenwänden des Mischkammergehäuses (7, 18) und der oberen Wand (26) des Flüssigmediumgehäuses und der ersten Seitenwand (27) einen Wert zwischen 3 und 8 mm oder einen Wert zwischen 4 und 6 mm oder einen Wert von 5 mm aufweist.

## Revendications

1. Agencement (1) destiné à introduire un milieu liquide, par exemple de l'urée, dans les gaz d'échappement d'un moteur diesel à combustion, lequel agencement (1) comprend :
- un carter de chambre de mélange (7, 18) renfermant une chambre de mélange (21A, 21B), ledit carter de chambre de mélange (7, 18) comprenant une entrée de gaz d'échappement (4) destinée à introduire des gaz d'échappement dans la chambre de mélange (21A, 21B) et une sortie de mélange (10) destiné fournir un mélange de milieu liquide et de gaz d'échappement hors de la chambre de mélange (21A, 21B) ; le carter de chambre de mélange (7, 18) étant formé d'une paroi supérieure (18A), un capuchon d'extrémité (18) et un déflecteur (7), dans lequel l'entrée de gaz d'échappement (4) et la sortie de mélange (10) sont prévues dans le déflecteur (7), c'est-à-dire que l'entrée de gaz d'échappement (4) et la sortie de mélange (10) sont placées du même côté du carter de la chambre de mélange (7, 18) ;
- un orifice d'injection de milieu liquide (19) destiné à injecter du milieu liquide dans la chambre de mélange (21A, 21B) ;
- un carter de milieu de liquide (22) placé à l'intérieur du carter de chambre de mélange (7, 18) et entouré par le carter de chambre de mélange (7, 18), le carter de milieu liquide (22) entourant la chambre de mélange (21A, 21B), le carter de milieu liquide (22) comprenant un second côté de carter de milieu liquide ouvert (23) dirigé vers l'orifice d'injection de milieu liquide (19), ledit second côté de carter de milieu liquide ouvert (23) formant l'entrée des gaz d'échappement et du milieu liquide dans la chambre de mélange (21A, 21B), l'orifice d'injection de milieu liquide (19) et le carter de milieu liquide (22) étant agencés de manière à ce que le milieu liquide ne soit injecté que dans le carter de milieu liquide (22), dans lequel les parois extérieures du carter de milieu liquide (22) sont espacées des parois intérieures du carter de chambre de mélange (7, 18), et dans lequel l'entrée de gaz d'échappement (4) et le carter de milieu liquide (22) sont agencés de manière à ce que, pendant le fonctionnement, un écoulement de gaz d'échappement exempt de milieu liquide soit créé autour du carter de milieu liquide (22), dans lequel l'entrée de gaz d'échappement (4) et le carter de milieu liquide (22) sont agencés de telle sorte que, pendant le fonctionnement,
l'écoulement de gaz d'échappement exempt de milieu liquide créé autour du carter de milieu liquide (22) est dirigé vers le second côté ouvert du carter de milieu liquide (23) dirigé vers l'orifice d'injection de milieu liquide (19), **caractérisé en ce que** l'agencement (1) comprend en outre un carter tubulaire de filtre à particules diesel (2) s'étendant à travers une ouverture inférieure (8) du déflecteur (7), ladite ouverture inférieure (8) formant l'entrée de gaz d'échappement (4), ledit carter tubulaire de filtre à particules diesel (2) a un axe de carter de filtre à particules diesel (6) s'étendant transversalement au déflecteur (7), l'axe d'orifice d'injection (20) de l'orifice d'injection de milieu liquide (19) étant transversal à l'axe de carter de filtre à particules diesel (6) et **en ce que** la distance entre les première et seconde parois d'extrémité (29, 30) du carter de milieu liquide et le déflecteur (7) et le capuchon d'extrémité (18), respectivement, a une valeur comprise entre 3 et 8 mm ou une valeur comprise entre 4 et 6 mm ou une valeur de 5 mm.

2. Agencement (1) selon la revendication 1, **caractérisé en ce que** la seconde paroi d'extrémité du carter de milieu liquide (22) comprend une ou plusieurs dépressions (34) au niveau desquelles dépressions (34) la distance entre la seconde paroi d'extrémité du carter de milieu liquide (22) et le capuchon d'extrémité (18) augmente.

3. Agencement (1) selon la revendication 1 ou 2, **caractérisé en ce que** l'agencement (1) comprend en outre une plaque de guidage **(9)** positionnée au-dessus du carter de filtre à particules diesel et entourée par le carter de milieu liquide (22), la plaque de guidage (9) étant fixée au carter de milieu liquide (22), et **en ce que** l'axe de l'orifice d'injection (20) du port d'injection de milieu liquide (19) est parallèle à une paroi supérieure (13) de la plaque de guidage (9)

4. Agencement (1) selon la revendication 3, **caractérisé en ce que** la première paroi d'extrémité (29) du carter de milieu liquide (22) comprend une ouverture de sortie (31) adjacente à et en communication avec une ouverture supérieure du déflecteur (7), **en ce que** la première paroi d'extrémité du carter de milieu liquide (22) est fixée au déflecteur ou **en ce que** le carter de milieu liquide (22) comprend des brides adjacentes à l'ouverture de sortie du carter de milieu liquide (22), brides par lesquelles le carter de milieu liquide (22) est fixé au déflecteur.

5. Agencement (1) selon la revendication 3 ou 4, **caractérisé en ce que** le déflecteur comprend une ou plusieurs dépressions (33) au niveau desquelles dépressions (33) la distance entre le déflecteur (7) et le carter de milieu liquide (22) augmente.

6. Agencement (1) selon l'une quelconque des revendications précédentes, **caractérisé en ce que** le carter de chambre de mélange (7, 18) est sensiblement rectangulaire, **en ce que** l'orifice d'injection de milieu liquide (19) est disposé de manière adjacente à la paroi supérieure (18A) du carter de chambre de mélange (7, 18), et **en ce que** l'orifice d'injection de milieu liquide (19) a un axe d'orifice d'injection (20) parallèle à la paroi supérieure (18A) du carter de chambre de mélange (7, 18).

7. Agencement (1) selon la revendication **6, caractérisé en ce que** le carter de milieu liquide (22) comprend une paroi supérieure (26) s'étendant au-dessus de l'orifice d'injection de milieu liquide (19).

8. Agencement (1) selon l'une quelconque des revendications précédentes, **caractérisé en ce que** le carter de milieu liquide (22) comprend une paroi de fond (24) s'étendant à partir d'une première paroi latérale de carter de milieu liquide (27) en partie sur la largeur du carter de chambre de mélange (7, 18).

9. Agencement (1) selon les revendications 7 ou 8, **caractérisé en ce que** la distance entre les parois intérieures du carter de chambre de mélange (7, 18) et la paroi supérieure (26) et la première paroi latérale (27) du carter de milieu liquide a une valeur comprise entre 3 et 8 mm ou une valeur comprise entre 4 et 6 mm ou une valeur de 5 mm.
